# EUROPEAN PATENT SPECIFICATION

(11) **EP 3 421 273 B1**
(45) Date of publication and mention of the grant of the patent: **18.11.2020**
(21) Application number: 17179093.4
(22) Date of filing: 30.06.2017
(51) Int. Cl.: B60D 1/02, B60D 1/62, B60D 1/28

(54) **SUPPORT MEMBER FOR A TRAILER COUPLING AND A TRAILER COUPLING COMPRISING SUCH A SUPPORT MEMBER**
TRÄGERELEMENT FÜR EINE ANHÄNGERKUPPLUNG UND EINE ANHÄNGERKUPPLUNG MIT EINEM DERARTIGEN TRÄGERELEMENT
ÉLÉMENT DE SUPPORT POUR UN ATTELAGE DE REMORQUE ET ATTELAGE DE REMORQUE COMPRENANT UN TEL ÉLÉMENT DE SUPPORT

(43) Date of publication of application: 02.01.2019
(73) Proprietor: VBG Group AB (Publ), 462 28 Vänersborg (SE)
(72) Inventor: THORÉN, Anders, 460 64 FRÄNDEFORS (SE); KARLSSON, Erik, 467 91 GRÄSTORP (SE)
(74) Representative: AWA Sweden AB

(56) References cited:
- EP-A1- 2 650 148
- EP-A1- 3 047 986
- EP-A2- 1 400 712
- WO-A1-2005/102744
- CA-A1- 2 881 450

## Description

### TECHNICAL FIELD OF THE INVENTION

The present invention relates to a support member for a trailer coupling and to a trailer coupling comprising such a support member.

### BACKGROUND OF THE INVENTION

Heavy vehicles, such as trucks, are often equipped with a coupling allowing a trailer to be connected to the vehicle. An example of such a coupling is the "VBG 795V-2" sold by VBG AB, which has a guiding funnel for receiving an eye of a drawbar fixed to a trailer and a vertically movable pin for securing the eye inside the guiding funnel. In order to connect a trailer to the truck, the pin is first manually raised by means of a handle to a locked upper position in which a lower portion of the pin still extends into the guiding funnel. The truck driver then manoeuvres the truck to position the eye inside the guiding funnel. Upon entering the guiding funnel, the eye comes into contact with the lower portion of the pin and thereby pushes the pin slightly upwards. The upward movement releases the locked pin, which then drops down automatically through the eye, the pin thereby locking the eye in a towing position inside the guiding funnel.

The above-described coupling has a support arranged to abut from below against the eye in order to reduce contact wear between the guiding funnel and the eye. Over time the support wears out and need to be replaced. It happens that the support is not replaced in time, something which can lead to excessive wear on the coupling and the eye, possibly causing damage thereon. Moreover, if the support is not replaced in time, the driver may suddenly find that the trailer cannot be connected to the truck, because there is too much space between the worn-out support and the lower portion of the pin. The eye can then enter the compartment without unlocking the pin by pushing it upwards. In order to avoid such a scenario, some drivers replace the support too early, something which causes unnecessary costs.

Clearly, it would be desirable that the driver be notified at the appropriate time of the need to replace the support. The document EP 2 650 148 A1 discloses a replaceable support member according to the preamble of claim 1.

### SUMMARY OF THE INVENTION

In view of the foregoing, and according to a first aspect of the invention, there is provided a replaceable support member for a trailer coupling mounted on a towing vehicle, the support member being intended to support a connection portion of a drawbar mounted to a trailer, the support member thereby being susceptible to wear by the connection portion, wherein the support member is formed by a wearable material, and comprises an electrically conductive element integrated with the wearable material, the conductive element being arranged so as to form a part of an electrical circuit, and so that, when an amount of wear of the support member exceeds a predetermined threshold, an electrical state of the electrical circuit changes.

According to a second aspect of the invention, there is provided a trailer coupling for connecting a trailer to a towing vehicle on which the trailer coupling is mounted, wherein the trailer coupling is adapted to receive a connection portion of a drawbar mounted to the trailer to be towed, and wherein the trailer coupling comprises a replaceable support member according to the first aspect of the invention, the support member being arranged so that, when the coupling portion is received by the trailer coupling and positioned in a towing position, the support member abuts against the connection portion.

The "towing vehicle" may be a motorized truck or an intermediate trailer, i.e. a trailer which is pulled by a truck and which in turn pulls a subsequent trailer. The "towing position" is such that, when the connection portion is secured in the towing position, the trailer can be towed by the towing vehicle. The coupling member may for example be a pin.

The electrical circuit typically comprises a part arranged on the support member and another part arranged elsewhere on the trailer coupling, the two parts being arranged so as to be electrically connected to each other when the support member is mounted on the trailer coupling.

The invention is based on the realization that the actual wear process is useful as a type of trigger indicating that the support member will soon need replacement. This insight led the inventors to the above-described support member and trailer coupling, which represent a simple, reliable and inexpensive solution implementing their idea.

By setting the predetermined threshold appropriately, one can ensure that the driver is alerted before there is any risk of damage to the trailer coupling and to the connection portion. The forewarning also enables the driver to check whether a new support member is in stock or needs to be ordered, whereby the time that the truck is not on the road may be reduced.

The conductive elements are embedded in the wearable material.

The conductive elements may be arranged so that the electrical state of the electrical circuit changes from a non-conducting state to a conducting state, or vice versa, when the predetermined threshold is exceeded. Differently stated, the conductive elements may be arranged so that the electrical circuit changes from being an open circuit to being a closed circuit, or vice versa, when the predetermined threshold is exceeded.

The conductive elements are arranged so that the electrical circuit is closed by the connection portion when the predetermined threshold is exceeded, whereby the electrical state of the electrical circuit changes from a non-conducting state to a conducting state. This is a particularly simple and reliable example of a way to change the electrical state of the of the circuit.

The electrical circuit may comprise a sensor configured to detect the change in electrical state of the electrical circuit. The sensor may for example be configured to detect a change in a current flowing in the electrical circuit or a change in a resistance of the electrical circuit. The sensor is usually arranged on the trailer coupling.

The trailer coupling may be adapted to receive a connection portion in the form of an eye, and the trailer coupling may further comprise a movable coupling member having a first position, in which the coupling member allows for the connection portion to be moved into and out of the towing position, and a second position, in which the coupling member secures the connection portion in the towing position by extending therethrough. The coupling member may for example be a pin.

The coupling member may be arranged to be automatically locked in the first position upon entering the first position and to be unlocked by a push in an unlocking direction, and the predetermined threshold may be such that, when the coupling member is in the first position and the amount of wear of the support member is less than or equal to the predetermined threshold, the connection portion is unable to enter and leave the towing position without pushing the coupling member to unlock. Such a choice of predetermined threshold ensures that the driver is forewarned so that a situation, where the coupling member is not unlocked upon insertion of the connection portion, can be avoided.

The unlocking direction may be upward.

The trailer coupling may further comprise a locking member arranged to lock the coupling member in the second position and a lock sensor configured to detect a position of the locking member.

The lock sensor may be integrated with the sensor configured to detect the change in electrical state of the electrical circuit. This may reduce the number of components of the trailer coupling and, thus, production costs.

The support member may be arranged inside a guiding funnel. Such a guiding funnel helps to guide the connection portion into the towing position.

### BRIEF DESCRIPTION OF THE DRAWINGS

The invention will now be described in more detail in the following with reference to the accompanying drawings, which by way of example illustrate a preferred embodiment of the invention.
Figure 1 is a perspective view of a trailer coupling and a drawbar.
Figure 2 is an exploded view in perspective of the trailer coupling in Figure 1.
Figure 3 is schematic a cross-sectional view of the trailer coupling in Figure 1 along line A-A.
Figure 4 is a schematic cross-sectional view of the trailer coupling in Figure 1 along the line B-B.
Figure 5 is similar to Figure 3, but the coupling member is shown in the upper position instead of in the lower position as in Figure 3.
Figure 6 is similar to Figure 4, but the coupling member is shown in the upper position instead of in the lower position as in Figure 4.
Figure 7 shows a schematic cross-sectional side view of a connection portion and a support member. The support member is shown in an unworn state.
Figure 8 is similar to Figure 7, but the support member is shown in a worn state.

### DETAILED DESCRIPTION OF PREFERRED EMBODIMENTS

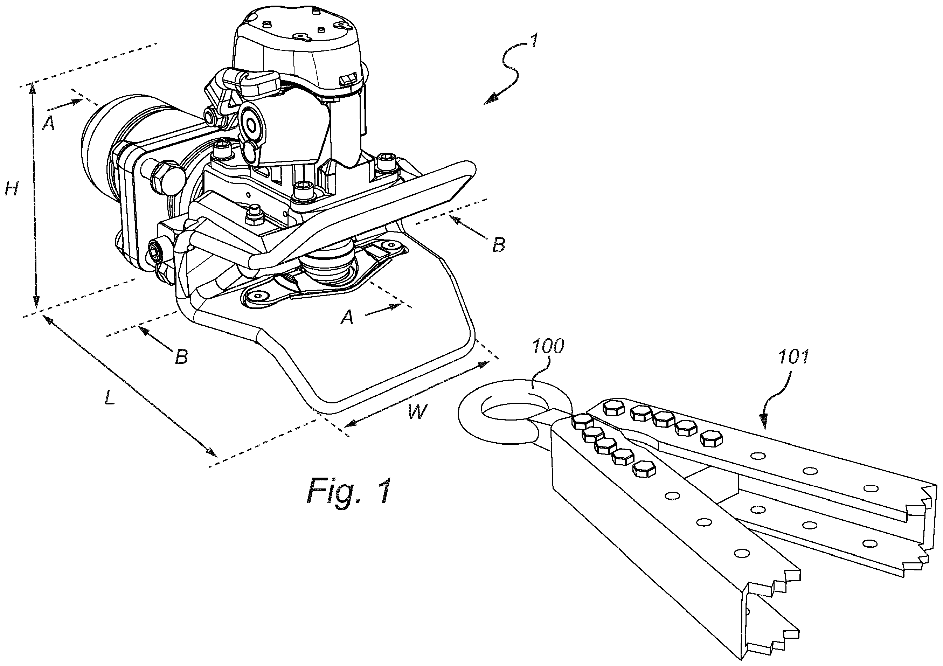

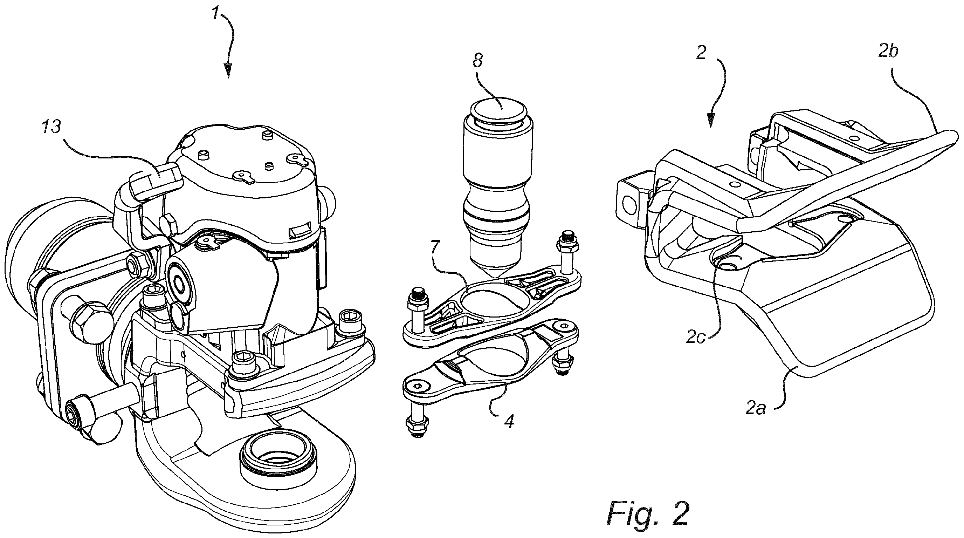

With respect to Figures 1 to 8 a trailer coupling 1 will be described. The trailer coupling 1 is adapted to be mounted at the rear end of a towing vehicle, such as a truck or a trailer, and to engage with a connection portion 100 of a drawbar 101 mounted to a trailer to be towed by the towing vehicle (the towing vehicle and the trailer to be towed are not shown in the Figures). In the illustrated example, the connection portion 100 is an eye, and the connection portion 100 will in the following therefore be referred to as the eye.

The trailer coupling 1 has a height H, a width W and a length L. When the trailer coupling 1 is mounted to a truck, the trailer coupling 1 is oriented such that the height H is vertical and the width W and length L are horizontal. The values of H, L and W depend on application-specific requirements, such as the size of the eye 100 with which the trailer coupling 1 is intended to be used.

The trailer coupling 1 comprises a guiding funnel 2 which may alternatively be referred to as a coupling mouth. The guiding funnel 2 is made of a hard and wear-resistant material, such as steel or some other metal. The guiding funnel 2 has two lips 2a, 2b. The two lips 2a, 2b are separated in the vertical direction, the lower lip 2a and the upper lip 2b extending obliquely downwards and obliquely upwards, respectively, in the rearward direction away from the truck. The lips 2a, 2b are arranged to guide the eye 100 into a compartment 3 defined by the guiding funnel 2.

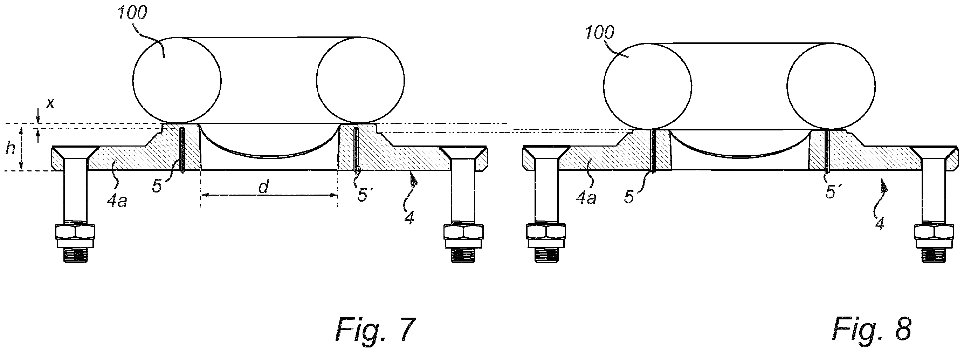

The guiding funnel 2 comprises a seat 2c in which a support member 4 is arranged. The support member 4 is arranged so as to abut against the eye 100 when the eye 100 is positioned in a towing position inside the compartment 3. Thus, when in the towing position, the eye 100 lies on the support member 4. The support member 4 is removably arranged in the seat 2c, so the support member 4 can be replaced when worn out due to friction against the eye 100. The Figures 1 to 7 show the support member 4 in an unworn state, and Figure 8 shows the support member 4 in a worn state. In the illustrated example, the support member 4 is fixed to the seat 2c by means of two screws.

The size and the shape of the support member 4 depend on application-specific requirements, such as the size of the coupling member 8 (further discussed below) and the size of the eye 100 with which the trailer coupling 1 is intended to be used. The support member 4 may for example have an annular shape or a rectangular shape. In the illustrated example, the support member 4 has an elongated shape with a central through hole. In Figure 7, the diameter of the through hole is denoted by d. The length of the diameter d is such that the support member 4 can receive the coupling member 8 inside the through hole. The diameter d is usually in the range from 30 mm to 70 mm. The maximum height of the support member 4 in the unworn state is denoted by h in Figure 7. That height is typically less 5 cm, for example approximately 2 cm. When the trailer coupling 1 is mounted to a truck, the support member 4 is positioned such that the height h is vertical and the diameter d is horizontal.

The support member 4 comprises a wearable material 4a. The choice of wearable material 4a depends on application-specific requirements, such as the material of which the eye 100 is made. Generally, it is desired that the eye 100 wear out the support member 4, and not the other way around. Accordingly, one usually chooses a wearable material 4a that is softer than the eye 100 and/or adapts the structure of the support member's 4 top surface, i.e. the surface that is in contact with the eye 100 during use. The wearable material 4a is typically chosen from the group consisting of plastic materials, composite materials and metals. In the illustrated example, the wearable material 4a is made of ductile cast iron.

The support member 4 includes an electrically conductive element which, in the illustrated example, is formed by two conductors 5, 5'. The conductors 5, 5' are embedded in the wearable material 4a. Each one of the conductors 5, 5' is in this case an electrical cable. Each cable comprises an electrically conducting wire inside an electrically isolating jacket which isolates the wire from the wearable material 4a. Of course, in a different example where the wearable material 4a is not electrically conductive, the electrically isolating jackets may be omitted. The conductors 5, 5' are positioned on different sides of the through hole of the support member 4. Both conductors 5, 5' are straight and extend parallel to the height h of the support member 4. The conductors 5, 5' may in another example have a different shape, such as a curved shape, and/or be positioned differently. As can be seen in Figures 7 and 8, the top ends of the conductors 5, 5' are located below the top surface of the support member 4. The vertical distance between support member 4 and the top ends of the conductors 5, 5' is in this case the same for both conductors 5, 5'. The distance is denoted by x in Figure 7 and is usually less than 5 mm, such as 3 mm or 4 mm.

As will be further discussed below, during use of the trailer coupling 1, the eye 100 will wear down the support member 100 and, eventually, come into electrical contact with the conductors 5, 5'. When this happens, a predetermined threshold is reached. The predetermined threshold can be adjusted by changing the distance x. The shorter the distance x, the sooner the predetermined threshold is reached. One preferably defines the predetermined threshold so that, when the threshold is reached, the eye 100 still can release the coupling member 8 (further discussed below) when moving into and out of the towing position. Differently stated, the predetermined threshold is preferably reached before the eye 100 can move into and out of the towing position without releasing the coupling member 8.

The conductors 5, 5' are electrically connected to a sensor 6. The seat 2c may for example be provided with electrical connectors that electrically connects the conductors 5, 5' to the sensor 6 via one or more conducting paths on the trailer coupling 1. The conductors 5, 5' and the sensor 6 thus form part of an electrical circuit arranged partly on the support member 4 and partly elsewhere on the trailer coupling 1. The sensor 6 is configured to monitor an electrical state of the electrical circuit, the state being indicative of whether the amount of wear of the support member 4 has reached the predetermined threshold mentioned above. More precisely, in the illustrated example, the sensor 6 is configured to detect if the electrical circuit changes from a non-conducting state, in which no current flows in the electrical circuit, to a conducting state, in which a current flows in the electrical circuit. To this end, the sensor 6 may for example be configured to measure a current or a resistance of the electrical circuit. The sensor 6 is arranged close to where the top of the coupling member 8 (further discussed below) is located when the coupling member 8 is in the upper position, but sensor 6 may be arranged at a different position on the trailer coupling 1 in a different example.

The trailer coupling 1 includes a protection member 7. The protection member 7 is similar to the support member 4, but does not have any conductors. The protection member 7 is arranged vertically opposite to the support member 4 so that, when the eye 100 is positioned in the towing position, the eye 100 is positioned between the support member 4 and the protection member 7. The protection member 7 helps to prevent the guiding funnel 2 and the eye 100 from wearing against each other. It should be noted that the protection member 7 is optional, so other examples of the trailer coupling 1 do not necessarily have a protection member 7.

The trailer coupling 1 further comprises a movable coupling member 8 for securing the eye 100 to the trailer coupling 1. In the illustrated example, the coupling member 8 is a pin, and the coupling member 8 will be referred to as the coupling pin in the following. The coupling pin 8 is arranged to secure the eye 100 by extending through the eye 100. The coupling pin 8 is typically made of a metal, for example steel, but can be made of some other hard and wear-resistant material such that the coupling pin 8 is capable of withstanding the forces acting thereon from the eye 100 during normal operation. The coupling pin 8 is movable between a first position and a second position by a mechanism arranged to lift the coupling pin 8. In the illustrated example, the mechanism includes a pivotable arm 9 and a lifting sleeve 10. The lifting sleeve 10 engages with a groove in the coupling pin 8. The lifting sleeve 10 is usually made of a plastic material.

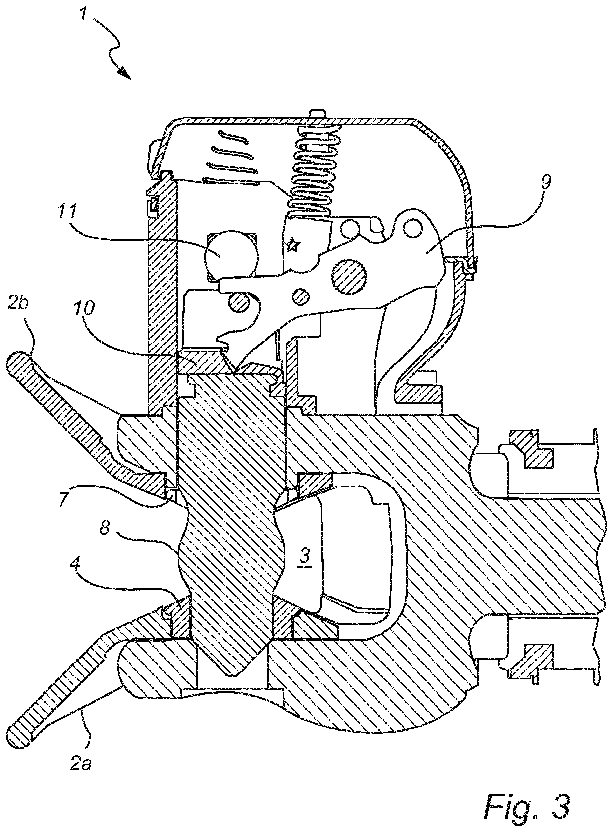

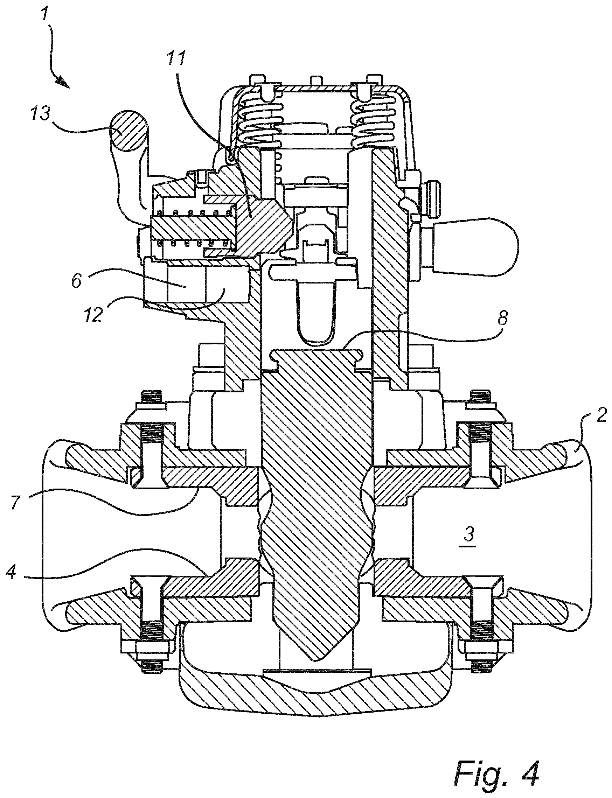

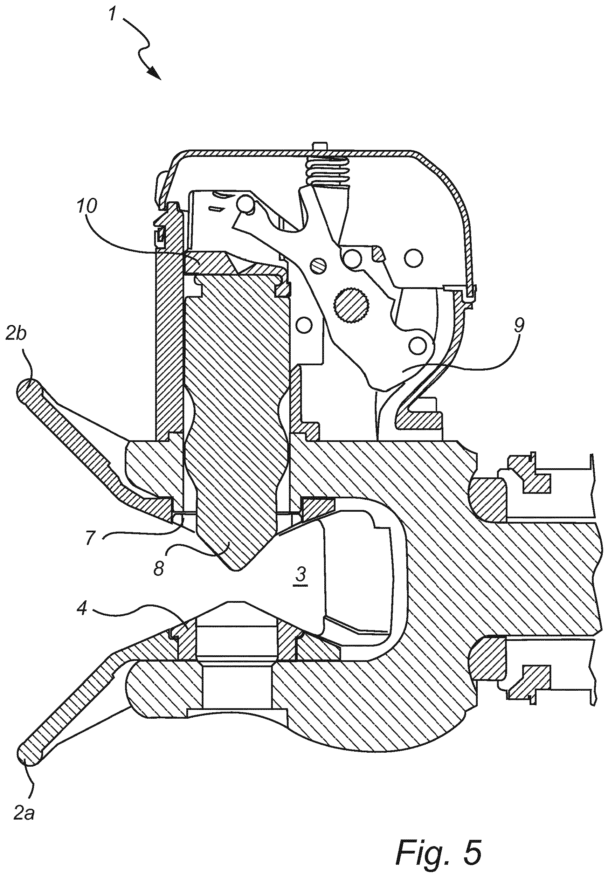

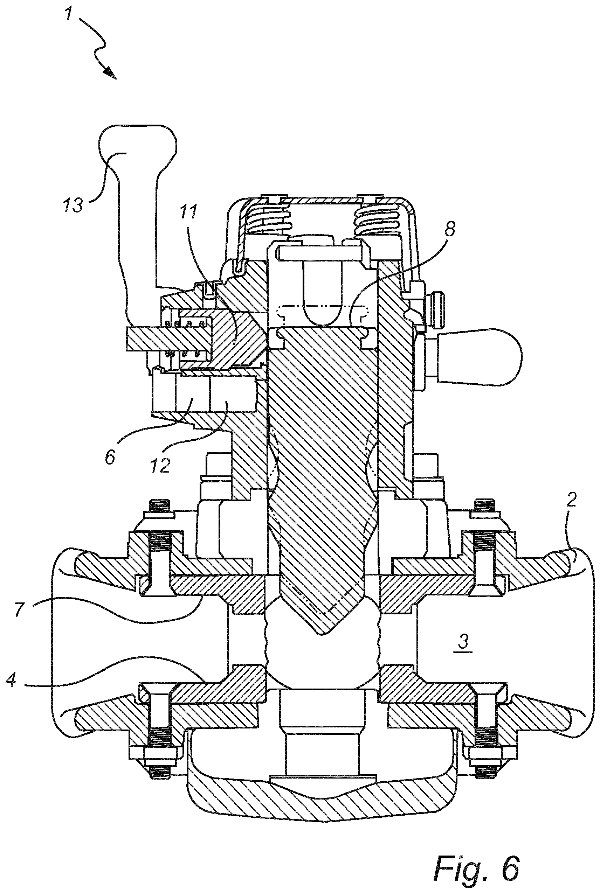

Figures 5 and 6 illustrate the coupling pin 8 in the first position, and Figures 3 and 4 illustrate the coupling pin 8 in the second position. As can be seen in these Figures, the first position is an upper position and the second position is a lower position. Accordingly, the first position will henceforth be referred to as the upper position and the second position will be referred to as the lower position. The path along which the coupling pin 8 moves between the upper and lower positions is straight.

In the upper position (see Figures 5 and 6), the coupling pin 8 is positioned such that a bottom portion of the coupling pin 8 protrudes into the compartment 3 from above. The bottom portion does not extend all the way down to the support member 4. So there is some free, vertical space between support member 4 and the coupling pin 8 when the latter is in the upper position. As will be further explained below, the eye 100 may then move into and out of the towing position by pushing the coupling pin 8 upwards.

In the lower position (see Figures 3 and 4), the coupling pin 8 extends through the entire compartment 3 as well as the through hole of the support member 4. The support member 4 is thus arranged so as to receive the coupling pin 8 when the coupling pin 8 is in the lower position.

The illustrated trailer coupling 1 further comprises a mechanism capable of locking the coupling pin 8 in the lower position. The locking mechanism comprises the arm 9 and a locking member 11. The locking member 11 is in this case a pin. The locking member 11 is movable along a path which is straight and horizontal. It follows that in the illustrated example the locking member 11 and the coupling pin 8 are movable along paths that are perpendicular to each other. Figure 4 shows the locking member 11 at one of the two end positions of the path, and Figure 6 shows the locking member 11 at the other end position. When positioned as in Figure 4, the arm 9 and the locking member 11 help to prevent the coupling pin 8 from moving upward, whereby the coupling pin 8 is locked in the lower position. When positioned as in Figure 6, the locking member 11 does not prevent the coupling pin 8 from moving. A lock sensor 12 is configured to detect whether the locking member 11 is positioned at any of the end positions and, thereby, whether the coupling pin 8 is locked or unlocked. The lock sensor 12 is a contactless sensor, such as an optical sensor, an inductive sensor, a magnetic sensor or a Hall effect sensor. The lock sensor 12 is exposed to grease, dirt, etc., and contactless sensors are particularly suitable for such an environment. However, it is possible to use a contact sensor instead of a contactless sensor. The lock sensor 12 may be integrated with the sensor 6 for monitoring the electrical circuit discussed above, but, in the illustrated example, these two sensors 6, 12 are separate units. The two sensors 6, 12 are in this case arranged close to the locking member 11. Arranging the lock sensor 12 close to the locking member 11 helps to increase the accuracy with which the lock sensor 12 detects the position of the locking member 11.

The trailer coupling 1 further comprises a mechanism capable of locking the coupling pin 8 in the upper position, which mechanism comprises the arm 9. In the illustrated example, the arm 9 thus helps to lock the coupling pin 8 in the lower position as well as the upper position. It should be noted that, when the coupling pin 8 is locked in the upper position, the coupling pin 8 can still move slightly in an unlocking direction, i.e. upward in the illustrated example. Such a movement releases the coupling pin 8 which, as a result, automatically falls down. The coupling pin 8 may for example be spring biased towards the lower position. The dotted contour in Figure 6 illustrates schematically an example position of the coupling pin 8 after having been pushed upward.

When the trailer coupling 1 is mounted to a truck, a trailer can be connected to the truck in the following way. First, the truck driver checks that the coupling pin 8 is in the upper position and manoeuvers the truck so that the trailer coupling 1 and the eye 100 are aligned and faces each other. The truck driver then carefully maneuvers the truck in reverse towards the eye 100. Upon entering the compartment 3, the eye 100 strikes the bottom portion of the coupling pin 8 which, thereby, is pushed upwards and released from its locked, upper position. The eye 100 enters the towing position inside the compartment 3, and the released coupling pin 8 automatically drops down, through the eye 100 and the support member 4. The coupling pin 8 is automatically locked in the lower position by the arm 9 and the locking member 11. The eye 100 is now secured to the trailer coupling 1, and the trailer is ready to be towed. Using a handle 13, the truck driver can unlock the coupling pin 8 and raise the coupling pin 8 from the lower position to the upper position. The eye 100 can then be pulled out of the trailer coupling 1. The eye 100 will push the coupling pin 8 upwards when moving out of the trailer coupling 1, something which causes the coupling pin 8 to automatically fall down (but not through the eye 100 which is no longer in the towing position).

During towing, the eye 100 causes wear on the support member 4 by mechanically abrading the top surface of the support member 4. Eventually the amount of wear of the support member 4 reaches a predetermined threshold. This is illustrated in Figure 8. The predetermined threshold is in this example reached when the eye 100 comes into electrical contact with the conductors 5, 5' so that a current can flow from one of the conductors 5, 5' to the other via the eye 100. The current is detected by the sensor 6, and the sensor 6, or some other unit connected to the sensor 6, alerts the truck driver that the support member 4 needs to be replaced. The truck driver may for example be alerted through the generation of an auditory signal and/or a visual signal.

The person skilled in the art realizes that the present invention is not limited to the preferred embodiment described above. For example, the predetermined threshold may be defined by the electrical circuit changing from being a closed circuit to being an open circuit. Differently stated, the sensor 6 may be configured to detect if the electrical circuit changes from a conducting state to a non-conducting state. In such an embodiment, the conductive element would be arranged so that the eye 100 breaks the electrical circuit monitored by the sensor 6 when the amount of wear of the support member 4 reaches the predetermined threshold.

Further, in the illustrated example, the wear of the protection member 7 is not monitored. A person skilled in the art realizes, however, that the protection member 7 may be adapted so that the wear thereof can be monitored in the same way as the support member 4. It should be noted that the support member 4 typically wears out much faster than the protection member 7, and in the illustrated example the idea is that one replaces the protection member 7 when replacing the support member 4, if deemed necessary.

Still further, the trailer coupling 1 may be equipped with a mechanism for facilitating the lifting of the coupling pin 8 from the lower position to the upper position, such as a pneumatic mechanism.

Such and other obvious modifications must be considered to be within the scope of the present invention, as it is defined by the appended claims. It should be noted that the above-described embodiment illustrates rather than limit the invention, and that those skilled in the art will be able to design many alternative embodiments without departing from the scope of the appended claims. In the claims, any reference signs placed between parentheses shall not be construed as limiting to the claim. The word "comprising" does not exclude the presence of other members or steps than those listed in the claim. The word "a" or "an" preceding a member does not exclude the presence of a plurality of such members.

## Claims

1. A replaceable support member (4) for a trailer coupling (1) mounted on a towing vehicle, the support member (4) being intended to be arranged in the trailer coupling to support a connection portion (100) of a drawbar (101) mounted to a trailer, such that, when the connection portion (100) is received by the trailer coupling (1) and positioned in a towing position, the connection portion abuts against the support member (4), the support member (4) thereby being susceptible to wear by the connection portion (100),
**characterized in that** the support member (4) is formed by a wearable material (4a), and comprises two electrically conductive elements (5, 5') embedded in the wearable material (4a), wherein the conductive elements (5, 5') are arranged so that, when the support member is arranged in the trailer coupling (1), the conductive elements (5, 5') form a part of an electrical circuit, and
wherein a top end of each conducting element is located below a top surface of the support member (4) intended to face the connection portion (100), so that, when an amount of wear of the support member (4) exceeds a predetermined threshold, the electrical circuit is closed by the connection portion (100), whereby an electrical state of the electrical circuit changes from a non-conducting state to a conducting state.

2. A trailer coupling (1) for connecting a trailer to a towing vehicle on which the trailer coupling (1) is mounted, wherein the trailer coupling (1) is adapted to receive a connection portion (100) of a drawbar (101) mounted to the trailer to be towed, and wherein the trailer coupling (1) comprises a replaceable support member (4) according to claim 1, the support member (4) being arranged so that, when the connection portion (100) is received by the trailer coupling (1) and positioned in a towing position, the support member (4) abuts against the connection portion (100).

3. The trailer coupling (1) according to claim 2, wherein the electrical circuit comprises a sensor (6) configured to detect the change in electrical state of the electrical circuit.

4. The trailer coupling (1) according to claim 2 or 3, wherein the trailer coupling (1) is adapted to receive a connection portion (100) in the form of an eye, and wherein the trailer coupling (1) further comprises
a movable coupling member (8) having a first position, in which the coupling member (8) allows for the connection portion (100) to be moved into and out of the towing position, and a second position, in which the coupling member (8) secures the connection portion (100) in the towing position by extending therethrough.

5. The trailer coupling (1) according to claim 4,
wherein the coupling member (8) is arranged to be automatically locked in the first position upon entering the first position and to be unlocked by a push in an unlocking direction,
and wherein the predetermined threshold is such that, when the coupling member (8) is in the first position and the amount of wear of the support member (8) is less than or equal to the predetermined threshold, the connection portion (100) is unable to enter and leave the towing position without pushing the coupling member (8) to unlock.

6. The trailer coupling (1) according to claim 5, wherein the unlocking direction is upward.

7. The trailer coupling (1) according to any of the claims 4 to 6, further comprising
a locking member (11) arranged to lock the coupling member (8) in the second position and
a lock sensor (12) configured to detect a position of the locking member (11).

8. The trailer coupling (1) according to claim 7, wherein the lock sensor (12) is integrated with the sensor (6) configured to detect the change in electrical state of the electrical circuit.

9. The trailer coupling (1) according to any of the claims 2 to 8, wherein the support member (4) is arranged inside a guiding funnel (2).

## Patentansprüche

1. Austauschbares Trägerelement (4) für eine an einem Zugfahrzeug montierte Anhängerkupplung (1), wobei das Trägerelement (4) in der Anhängerkupplung dazu vorgesehen ist, einen Verbindungsabschnitt (100) einer an einem Anhänger montierten Zugstange (101) zu tragen, so dass bei einer Aufnahme des Verbindungsabschnitts (100) durch die Anhängerkupplung (1) in einer Zugposition der Verbindungsabschnitt an dem Trägerelement (4) anliegt, wodurch das Trägerelement (4) durch den Verbindungsabschnitt (100) Verschleiß ausgesetzt ist,
**dadurch gekennzeichnet, dass** das Trägerelement (4) durch ein Verschleißmaterial (4a) gebildet ist und zwei elektrisch leitende Elemente (5, 5') umfasst, die in das Verschleißmaterial (4a) eingebettet sind, wobei die leitenden Elemente (5, 5') so angeordnet sind, dass, wenn das Trägerelement in der Anhängerkupplung (1) angeordnet ist, die leitenden Elemente (5, 5') einen Teil eines Stromkreises bilden, und
wobei sich ein oberes Ende jedes leitenden Elements unterhalb einer oberen Oberfläche des Trägerelements (4) befindet, die vorgesehen ist, zu dem Verbindungsabschnitt (100) gerichtet zu sein, so dass, wenn ein Verschleiß des Trägerelements (4) einen vorbestimmten Schwellenwert überschreitet, der Stromkreis durch den Verbindungsabschnitt (100) geschlossen wird, wodurch sich ein elektrischer Zustand des elektrischen Stromkreises von einem nichtleitenden Zustand in einen leitenden Zustand ändert.

2. Anhängerkupplung (1) zum Verbinden eines Anhängers mit einem Zugfahrzeug, an dem die Anhängerkupplung (1) montiert ist, wobei die Anhängerkupplung (1) zur Aufnahme eines Verbindungsabschnitts (100) einer an dem zu schleppenden Anhänger angebrachten Zugstange (101) angepasst ist, und wobei die Anhängerkupplung (1) ein auswechselbares Trägerelement (4) nach Anspruch 1 umfasst, wobei das Trägerelement (4) derart angeordnet ist, dass das Trägerelement (4) bei einer Aufnahme des Verbindungsabschnitts (100) durch die Anhängerkupplung (1) in einer Zugposition an dem Verbindungsabschnitt (100) anliegt.

3. Anhängerkupplung (1) nach Anspruch 2, wobei der Stromkreis einen Sensor (6) umfasst, der konfiguriert ist, um die Änderung des elektrischen Zustands des Stromkreises zu erfassen.

4. Anhängerkupplung (1) nach Anspruch 2 oder 3, wobei die Anhängerkupplung (1) dazu angepasst ist, einen Verbindungsabschnitt (100) in der Form einer Öse aufzunehmen, und wobei die Anhängerkupplung (1) ferner umfasst
ein bewegliches Kupplungselement (8), das eine erste Position aufweist, in der das Kupplungselement (8) ein Ein- und Ausfahren des Verbindungsabschnitts (100) in die Zugposition ermöglicht, und eine zweite Position, in der das Kupplungselement (8) den Verbindungsabschnitt (100) in der Zugposition sichert, indem es sich durch diesen erstreckt.

5. Anhängerkupplung (1) nach Anspruch 4, wobei das Kupplungselement (8) so angeordnet ist, dass es, beim Einfahren in die erste Position automatisch in der ersten Position verriegelt und durch einen Druck in eine Entriegelungsrichtung entriegelt wird,
und wobei der vorbestimmte Schwellenwert derart ist, dass, wenn sich das Kupplungselement (8) in der ersten Position befindet und der Verschleiß des Trägerelements (8) kleiner oder gleich dem vorbestimmten Schwellenwert ist, der Verbindungsabschnitt (100) nicht in die Zugposition Ein- oder Ausfahren kann, ohne das Kupplungselement (8) zum Entriegeln zu drücken.

6. Anhängerkupplung (1) nach Anspruch 5, wobei die Entriegelungsrichtung nach oben verläuft.

7. Anhängerkupplung (1) nach einem der Ansprüche 4 bis 6, ferner umfassend
ein Verriegelungselement (11), das angeordnet ist, um das Kupplungselement (8) in der zweiten Position zu verriegeln und
einen Verriegelungssensor (12), der konfiguriert ist, um eine Position des Verriegelungselements (11) zu erkennen.

8. Anhängerkupplung (1) nach Anspruch 7, wobei der Verriegelungssensor (12) in den Sensor (6) integriert ist, der konfiguriert ist, um die Änderung des elektrischen Zustands des Stromkreises zu erkennen.

9. Anhängerkupplung (1) nach einem der Ansprüche 2 bis 8, wobei das Trägerelement (4) in einem Führungstrichter (2) angeordnet ist.

## Revendications

1. Élément de support remplaçable (4) pour un attelage de remorque (1) monté sur un véhicule de remorquage, l'élément de support (4) étant destiné à être agencé dans l'attelage de remorque pour supporter une partie de connexion (100) d'une barre d'attelage (101) montée sur une remorque, de telle façon que lorsque la partie de connexion (100) est reçue par l'attelage de remorque (1) et positionnée dans une position de remorquage, la partie de connexion est adjacente à l'élément de support (4), l'élément de support (4) étant ainsi susceptible de s'user par la partie de connexion (100),
**caractérisé en ce que** l'élément de support (4) est formé par un matériau pouvant s'user (4a), et comprend deux éléments électriquement conducteurs (5, 5') enchâssés dans le matériau pouvant s'user (4a), dans lequel les éléments conducteurs (5, 5') sont arrangés de telle façon que lorsque l'élément de support est agencé dans l'attelage de remorque (1), les éléments conducteurs (5, 5') forment une partie d'un circuit électrique, et
dans lequel une extrémité supérieure de chaque élément conducteur est située en-dessous d'une surface supérieure de l'élément de support (4) destiné à être face à la partie de connexion (100) de telle façon que lorsqu'une quantité d'usure de l'élément de support (4) dépasse un seuil prédéterminé, le circuit électrique est fermé par la partie de connexion (100), ce par quoi un état électrique du circuit électrique se modifie d'un état non-conducteur à un état conducteur.

2. Attelage de remorque (1) pour connecter une remorque à un véhicule de remorquage sur lequel l'attelage de remorque (1) est monté, dans lequel l'attelage de remorque (1) est adapté pour recevoir une partie de connexion (100) d'une barre d'attelage (101) montée sur la remorque destinée à être remorquée, et dans lequel l'attelage de remorque (1) comprend un élément de support (4) remplaçable selon la revendication 1, l'élément de support (4) étant agencé de telle façon que lorsque la partie de connexion (100) est reçue par l'attelage de remorque (1) et positionnée dans une position de remorquage, l'élément de support (4) est adjacent à la partie de connexion (100).

3. Attelage de remorque (1) selon la revendication 2, dans lequel le circuit électrique comprend un capteur (6) configuré pour détecter la modification d'état électrique du circuit électrique.

4. Attelage de remorque (1) selon la revendication 2 ou 3, dans lequel l'attelage de remorque (1) est adapté pour recevoir une partie de connexion (100) sous forme d'un œil, et dans lequel l'attelage de remorque (1) comprend en outre
un élément de couplage mobile (8) ayant une première position dans laquelle l'élément de couplage (8) permet à la partie de connexion (100) d'être déplacée dans et hors de la position de remorquage, et une seconde position dans laquelle l'élément de couplage (8) fixe la partie de connexion (100) dans la position de remorquage en s'étendant au travers.

5. Attelage de remorque (1) selon la revendication 4, dans lequel l'élément de couplage (8) est agencé pour être automatiquement verrouillé dans la première position à l'entrée dans la première position et pour être déverrouillé par une poussée dans une direction de déverrouillage,
et dans lequel le seuil prédéterminé est tel que lorsque l'élément de couplage (8) est dans la première position et la quantité d'usure de l'élément de support (8) est inférieure ou égale au seuil prédéterminé, la partie de connexion (100) n'est pas en mesure d'entrer et de sortir de la position de remorquage sans pousser l'élément de couplage (8) pour déverrouiller.

6. Attelage de remorque (1) selon la revendication 5, dans lequel la direction de déverrouillage est vers le haut.

7. Attelage de remorque (1) selon l'une quelconque des revendications 4 à 6, comprenant en outre
un élément de verrouillage (11) agencé pour verrouiller l'élément de couplage (8) dans la seconde position, et
un capteur de verrou (12) configuré pour détecter une position de l'élément de verrouillage (11).

8. Attelage de remorque (1) selon la revendication 7, dans lequel le capteur de verrou (12) est intégré avec le capteur (6) configuré pour détecter la modification d'état électrique du circuit électrique.

9. Attelage de remorque (1) selon l'une quelconque des revendications 2 à 8, dans lequel l'élément de support (4) est agencé à l'intérieur d'une trémie de guidage (2).
